# EUROPÄISCHE PATENTANMELDUNG

(11) **EP 3 770 015 A1**
(43) Veröffentlichungstag der Anmeldung: **27.01.2021**
(21) Anmeldenummer: 19188197.8
(22) Anmeldetag: 24.07.2019
(51) Int. Cl.: B60Q 1/28, B60Q 1/30, B60Q 3/217, B60Q 3/64, B60Q 3/54, F21S 43/239, F21S 43/245

(54) **BELEUCHTUNGSVORRICHTUNG FÜR EIN PERSONEN- UND/ODER GÜTERTRANSPORTMITTEL ODER FÜR EIN EXTERNES ODER INTERNES VERKLEIDUNGSBAUTEIL EINES PERSONEN- UND/ODER GÜTERTRANSPORTMITTELS, EXTERNES ODER INTERNES VERKLEIDUNGSBAUTEIL SOWIE PERSONEN- UND/ODER GÜTERTRANSPORTMITTEL MIT EINER DERARTIGEN BELEUCHTUNGSVORRICHTUNG**

(71) Anmelder: Motherson Innovations Company Limited, London, Greater London EC3A 6AP (GB)
(72) Erfinder: Sepp, Benjamin, 77723 Gengenbach (DE); Mohrmann, Richard, 79194 Gundelfingen (DE)
(74) Vertreter: Westphal, Mussgnug & Partner Patentanwälte mbB

(57) **Zusammenfassung**

Die vorliegende Offenbarung betrifft eine Beleuchtungsvorrichtung (10) für ein Personen- und/oder Gütertransportmittel (36) oder für ein externes oder internes Verkleidungsbauteil (40) eines Personen- und/oder Gütertransportmittels (36), umfassend ein lichtdurchlässiges Tragelement (12) mit einer ersten Oberfläche (14) und einer zweiten Oberfläche (16), eine auf die erste Oberfläche (14) aufgetragene erste Beschichtung (18), eine auf die zweite Oberfläche (16) aufgetragene zweite Beschichtung (20), und zumindest eine Lichtquelle (22) zum Bereitstellen von Licht im Tragelement (12), wobei die erste Beschichtung (18) einen im Wesentlichen lichtundurchlässigen Abschnitt (23) und eine Anzahl von lichtdurchlässigen ersten Abschnitten (24) aufweist, und die zweite Beschichtung (20) so ausgebildet ist, dass die lichtdurchlässigen ersten Abschnitte (24) bei ausgeschalteter Lichtquelle (22) visuell der ersten Beschichtung (18) entsprechen oder nahezu entsprechen. Weiterhin betrifft die Offenbarung ein externes oder internes Verkleidungsbauteil (40) sowie ein Personen- und/oder Gütertransportmittel (36) mit einer derartigen Beleuchtungsvorrichtung (10).

## Beschreibung

Die vorliegende Offenbarung betrifft eine Beleuchtungsvorrichtung für ein Personen- und/oder Gütertransportmittel oder für ein externes oder internes Verkleidungsbauteil eines Personen- und/oder Gütertransportmittels. Weiterhin betrifft die Offenbarung ein externes oder internes Verkleidungsbauteil sowie ein Personen- und/oder Gütertransportmittel, jeweils mit einer derartigen Beleuchtungsvorrichtung.

Das Personen- und/oder Gütertransportmittel ist insbesondere als Kraftfahrzeug ausgeführt, kann aber auch ein Schiff, ein Flugzeug, ein Zug oder dergleichen sein. Wenn im Folgenden die Offenbarung in Bezug auf Fahrzeuge erläutert wird, gelten die Ausführungen gleichermaßen auch für andere Personen- und/oder Gütertransportmittel wie Schiffe, Flugzeuge, Züge oder dergleichen.

Insbesondere bei Fahrzeugen werden die Beleuchtungsvorrichtungen immer mehr zu einem prägenden Designelement, über welches eine markenspezifische Individualisierung gegenüber Fahrzeugen eines anderen Herstellers möglich wird. Allerdings ist die Gestaltungsfreiheit bei den Beleuchtungsvorrichtungen bislang vergleichsweise stark eingeschränkt, so dass sie nicht an beliebigen Stellen sowohl von externen als auch von internen Verkleidungsbauteilen wie Stoßfängern bzw. von Türverkleidungen angeordnet werden können. Ein wesentlicher Grund hierfür ist die Tatsache, dass die Verkleidungsbauteile in vielen Fällen eine komplexe Oberflächenwölbung aufweisen, die mit den bekannten Beleuchtungsvorrichtungen nicht oder nur mit sehr großem Aufwand nachgebildet werden kann.

Darüber hinaus eröffnen sich im Zuge der zunehmenden Elektrifizierung der Fahrzeuge neue Gestaltungsspielräume, bei denen die Beleuchtungsvorrichtungen auf eine bislang nicht bekannte Weise eingesetzt werden können. Da Elektromotoren im Gegensatz zu Verbrennungsmotoren keine Luftgitter mehr benötigen, können die Beleuchtungsvorrichtungen beispielsweise im Kühlergrill angeordnet werden. Luftgitter können aber dennoch vorgesehen sein, insbesondere aus Gestaltungsgründen, unterscheiden sich in diesem Fall aber deutlich von den für Verbrennungsmotoren verwendeten Luftgittern.

Damit die Beleuchtungsvorrichtungen auch bei derartigen Anwendungen zum Einsatz kommen können, müssen Sie an komplexe Oberflächengeometrien anpassbar sein, um nahtlos in die Oberfläche des betreffenden Verkleidungsbauteils des Personen- und/oder Gütertransportmittels oder in die Oberfläche des Personen- und/oder Gütertransportmittels selbst integriert werden zu können, wobei die Beleuchtungsvorrichtungen selbst nur geringen Bauraum benötigen sollen. Bekannte Beleuchtungsvorrichtungen, wie sie beispielsweise in der DE 10 2012 003200, der EP 2 628 638 A2 und der US 20150291085 A1 offenbart sind, können diese Anforderungen nicht oder nicht mit vertretbarem Aufwand erfüllen. Weitere Beleuchtungsvorrichtungen sind in der DE 10 2011 102 532 A1, EP 1 981 680 A1, der EP 3 144 182 A1 und der DE 10 2012 003 200 A1 offenbart.

Üblicherweise soll nicht die gesamte Sichtseite der Beleuchtungsvorrichtungen beleuchtet werden, sondern nur ein Teil davon. Daher weisen die Beleuchtungsvorrichtungen lichtdurchlässige Abschnitte auf, aus denen das Licht austreten kann. Beleuchtungsvorrichtungen werden vorwiegend in der Dämmerung und bei Dunkelheit eingeschaltet. Insbesondere bei großflächigen Beleuchtungsvorrichtungen tritt jedoch das Problem auf, dass sich die lichtdurchlässigen Abschnitte im Hellen, also dann, wenn die verwendeten Lichtquellen ausgeschaltet sind, deutlich von den übrigen Bereichen unterscheiden. Wenn die lichtdurchlässigen Abschnitte groß sind, können Funktionselemente der Beleuchtungsvorrichtung sichtbar sein. Hierdurch wird die optische Erscheinung der Beleuchtungsvorrichtungen negativ beeinflusst, so dass die Beleuchtungsvorrichtungen auch aus ästhetischen Gründen nur sehr bedingt eingesetzt werden können.

Aufgabe einer Ausführungsform der vorliegenden Offenbarung ist es, eine Beleuchtungsvorrichtung vorzuschlagen, mit welcher es mit einfachen und kostengünstigen Mitteln möglich ist, die Beleuchtungsvorrichtung auch bei externen oder internen Verkleidungsbauteilen einzusetzen, die eine komplexe Oberflächengeometrie aufweisen und die Beleuchtungsvorrichtung so auszugestalten, dass sie auch bei ausgeschalteten Lichtquellen eine ansprechende optische Erscheinung bietet.

Des Weiteren liegt einer Ausbildung der vorliegenden Offenbarung die Aufgabe zugrunde, ein Verfahren zu schaffen, mit welchem eine derartige Beleuchtungsvorrichtung auf einfache und kostengünstige Weise gefertigt werden kann. Darüber hinaus liegt einer Ausgestaltung und einer Variante der Offenbarung die Aufgabe zugrunde, ein externes oder internes Verkleidungsbauteil bzw. ein Personen- und/oder Gütertransportmittel zu schaffen, welches mit einer derartigen Beleuchtungsvorrichtung ausgerüstet werden kann.

Diese Aufgabe wird mit den in den Ansprüchen 1, 11, 13 und 14 angegebenen Merkmalen gelöst. Vorteilhafte Ausführungsformen sind Gegenstand der Unteransprüche.

Eine Ausführungsform der Offenbarung betrifft eine Beleuchtungsvorrichtung für ein Personen- und/oder Gütertransportmittel oder für ein externes oder internes Verkleidungsbauteil eines Personen- und/oder Gütertransportmittels, umfassend
- ein lichtdurchlässiges Tragelement mit einer ersten Oberfläche und einer zweiten Oberfläche,
- eine auf die erste Oberfläche aufgetragene erste Beschichtung,
- eine auf die zweite Oberfläche aufgetragene zweite Beschichtung, und
- zumindest eine Lichtquelle zum Bereitstellen von Licht im Tragelement, wobei
- die erste Beschichtung zumindest einen im Wesentlichen lichtundurchlässigen Abschnitt und eine Anzahl von lichtdurchlässigen ersten Abschnitten aufweist, und
- die zweite Beschichtung (20) hinsichtlich ihrer Farbe und/oder ihrer Reflexionseigenschaften so ausgebildet ist, dass die lichtdurchlässigen Abschnitte bei ausgeschalteter Lichtquelle visuell der ersten Beschichtung entsprechen oder nahezu entsprechen.

Die vorschlagsgemäße Beleuchtungsvorrichtung ist einfach aufgebaut, so dass im Wesentlichen nur das lichtdurchlässige Tragelement an die Form des übrigen externen oder internen Verkleidungsbauteils angepasst werden muss. Daher kann die Beleuchtungsvorrichtung auch für Verkleidungsbauteile eingesetzt werden, die eine komplexe insbesondere Wölbungen beschreibende Oberflächengeometrie aufweisen. Zudem benötigt die vorschlagsgemäße Beleuchtungsvorrichtung nur wenig Bauraum, wodurch die Einsatzmöglichkeiten erhöht werden.

Es hat sich herausgestellt, dass mit der Ausbildung der zweiten Beschichtung die optische Wahrnehmung der lichtdurchlässigen Abschnitte der ersten Beschichtung beeinflusst werden kann. Aufgrund der Tatsache, dass die zweite Beschichtung so ausgebildet ist, dass die lichtdurchlässigen Abschnitte bei ausgeschalteter Lichtquelle visuell dem im Wesentlichen lichtundurchlässigen Abschnitt der ersten Beschichtung entsprechen oder nahezu entsprechen, weist die betreffende Beleuchtungsvorrichtung auf der Sichtseite eine einheitliche Erscheinung auf. Insbesondere können die lichtdurchlässigen Abschnitte bei ausgeschalteter Lichtquelle so gut wie nicht vom im Wesentlichen lichtundurchlässigen Abschnitt der ersten Beschichtung unterschieden werden. Ein Betrachter nimmt bei ausgeschalteter Lichtquelle daher eine homogene Oberfläche war, während bei eingeschalteter Lichtquelle das Licht die Beleuchtungsvorrichtung mit einer ausreichenden Helligkeit verlassen kann, so dass Beleuchtungsfunktion der Beleuchtungsvorrichtung nicht beeinträchtigt wird.

Es hat sich herausgestellt, dass insbesondere die Farbe und die Reflexionseigenschaften der zweiten Beschichtung einen entscheidenden Einfluss auf die visuelle oder optische Wahrnehmung der lichtdurchlässigen Abschnitte der ersten Beschichtung haben. Die Farbe und die Reflexionseigenschaften der zweiten Beschichtung lassen sich auf relativ einfache Weise ändern und auf die erste Beschichtung anpassen.

Werden die Farbe und die Reflexionseigenschaften entsprechend eingestellt, lassen sich die lichtdurchlässigen Abschnitte so gestalten, dass sie bei ausgeschalteter Lichtquelle den benachbarten lichtundurchlässigen Abschnitten der ersten Beschichtung weitgehend entsprechen und sich von diesen visuell oder optisch kaum unterscheiden lassen.

In einer weitergebildeten Ausführungsform kann das lichtdurchlässige Tragelement aus Glas oder aus einem lichtdurchlässigen Kunststoff bestehen. Sowohl Glas als auch nicht durchlässiger Kunststoff stellen günstige Materialien dar, welche sich zur Bereitstellung der Beleuchtungsvorrichtung, insbesondere für das Auftragen der ersten Beschichtung und der zweiten Beschichtung, bestens eignen. Für den Fall, dass die Beleuchtungsvorrichtung in einem Verkleidungsbauteil angeordnet werden soll, welches eine komplexe Oberflächengeometrie aufweist, bietet es sich an, einen transparenten und spritzgussfähigen Kunststoff wie PMMA (Polymethylmethacrylat) oder PC (Polycarbonat) zu verwenden. Mit dem Spritzgussverfahren lässt sich die Beleuchtungsvorrichtung auf vergleichsweise einfache und günstige Weise an die vorliegende Oberflächengeometrie anpassen.

Bei einer weitergebildeten Ausführungsform kann das lichtdurchlässige Tragelement zum Auskoppeln des Lichts lichtstreuend sein und/oder Lichtauskopplungsstrukturen aufweisen. In dieser Ausführungsform wird gewährleistet, dass eine ausreichende Lichtmenge die Beleuchtungsvorrichtung durch die lichtdurchlässigen ersten Abschnitte verlassen kann. Dabei wird das lichtdurchlässige Tragelement so ausgestaltet, dass das Licht gezielt zu den lichtdurchlässigen ersten Abschnitten hin gelenkt wird. Die Lichtauskopplungsstrukturen können ähnlich wie ein Spiegel wirken, so dass das Licht von den Lichtauskopplungsstrukturen entsprechend abgelenkt wird.

Bei einer weiteren Ausführungsform kann die erste Beschichtung als eine Lackierung ausgebildet sein oder eine Folie umfassen oder aus dieser bestehen. Die Verwendung von Folien und Lackierungen hat sich als besonders günstig erwiesen, die Beleuchtungsvorrichtung mit den lichtdurchlässigen ersten Abschnitten zu versehen. Insbesondere bei der Verwendung von Folien ist es möglich, diese bereits vor dem Auftragen auf das lichtdurchlässige Tragelement mit Ausnehmungen zu versehen, welche die lichtdurchlässigen ersten Abschnitte bilden, wenn die Folie auf das lichtdurchlässige Tragelement aufgebracht ist. Zusätzliche Arbeitsschritte zum Herstellen der lichtdurchlässigen ersten Abschnitte sind in diesem Fall nicht erforderlich.

Eine weitergebildete Ausführungsform zeichnet sich dadurch aus, dass die erste Beschichtung eine oder mehrere Schutzschichten umfasst, die zumindest in den lichtdurchlässigen Abschnitten lichtdurchlässig sind. Insbesondere dann, wenn die Beleuchtungsvorrichtung an einem externen Verkleidungsbauteil, beispielsweise an einem Stoßfänger oder an einer Heckklappe eines Kraftfahrzeugs angeordnet wird, wird es hohen äußeren Belastungen ausgesetzt, beispielsweise Steinschlag oder UV-Strahlung. Die Schutzschichten dienen dazu, die Beleuchtungsvorrichtung vor derartigen Einflüssen zu schützen. Dabei können die Schutzschichten so ausgeführt werden, dass eine kratzfeste Class-A-Oberfläche bereitgestellt wird.

Nach Maßgabe einer weiteren Ausführungsform weist die zweite Beschichtung eine Anzahl von lichtdurchlässigen zweiten Abschnitten auf. Dabei ist die Lichtquelle von der ersten Beschichtung aus gesehen hinter der zweiten Beschichtung angeordnet. Grundsätzlich kann das Licht seitlich oder von hinten, also von der Sichtseite abgewandt, in das lichtdurchlässige Tragelement eingeleitet werden. Wenn jedoch die Lichtquelle von der ersten Beschichtung aus gesehen hinter der zweiten Beschichtung angeordnet ist, muss die zweite Beschichtung mit lichtdurchlässigen zweiten Abschnitten versehen werden, um Licht in das lichtdurchlässige Tragelement einleiten zu können. Diese Ausführungsform der Beleuchtungsvorrichtung bietet sich insbesondere dann an, wenn der Bauraum, der sich seitlich der Beleuchtungsvorrichtung anschließt, begrenzt ist.

Eine weitere Ausführungsform zeichnet sich dadurch aus, dass die lichtdurchlässigen zweiten Abschnitte von der ersten Beschichtung aus gesehen versetzt zu den lichtdurchlässigen ersten Abschnitten angeordnet sind. Für den Fall, dass die Lichtquellen von der ersten Beschichtung aus gesehen hinter der zweiten Beschichtung angeordnet sind, können die Lichtquellen von der Sichtseite her erkennbar sein. Dadurch, dass die lichtdurchlässigen ersten Abschnitte versetzt zu den zweiten Abschnitten angeordnet sind, wird die Erkennbarkeit der Lichtquellen von der Sichtseite her deutlich verringert.

Nach Maßgabe einer weiteren Ausführungsform ist die zweite Beschichtung als eine Lackierung ausgebildet oder umfasst eine Folie umfasst oder besteht aus dieser. Die Verwendung von Folien und Lackierungen hat sich als besonders günstig erwiesen, die Beleuchtungsvorrichtung mit den lichtdurchlässigen zweiten Abschnitten zu versehen. Insbesondere bei der Verwendung von Folien ist es möglich, diese bereits vor dem Auftragen auf das lichtdurchlässige Tragelement mit Ausnehmungen zu versehen, welche die lichtdurchlässigen zweiten Abschnitte bilden, wenn die Folie auf das lichtdurchlässige Tragelement aufgebracht ist. Zusätzliche Arbeitsschritte zum Herstellen der lichtdurchlässigen zweiten Abschnitte sind nicht erforderlich.

In einer weitergebildeten Ausführungsform kann die zweite Beschichtung eine oder mehrere Schutzschichten umfassen. Zwar ist die zweite Beschichtung nicht unmittelbar den bereits erwähnten äußeren Einflüssen ausgesetzt, da sie üblicherweise zum Innern des Personen-und/oder Gütertransportmittels hinzeigt. Allerdings können trotzdem bestimmte äußere Einflüsse auf die zweite Beschichtung wirken, beispielsweise Temperatur oder Feuchtigkeit. Das Vorsehen von Schutzschichten innerhalb der zweiten Beschichtung trägt folglich zu einem Schutz der Beleuchtungsvorrichtung bei.

Bei einer weitergebildeten Ausführungsform kann die zweite Beschichtung im Wesentlichen lichtundurchlässig sein. Wie erwähnt, ist die Beleuchtungsvorrichtung in der Regel nur von der Sichtseite her zu erkennen. Aufgrund der Tatsache, dass die zweite Beschichtung im Wesentlichen lichtundurchlässig ist, wird gewährleistet, dass das Licht, welches von den Lichtquellen bereitgestellt und welches in das Tragelement eingeleitet wird, die Beleuchtungsvorrichtung nur über die erste Beschichtung verlässt. Somit kann das Licht die Beleuchtungsvorrichtung nicht über die zweite Beschichtung verlassen und geht nicht ungenutzt verloren.

Eine Ausbildung der Offenbarung betrifft Verfahren zum Herstellen einer Beleuchtungsvorrichtung nach einem der vorherigen Ansprüche, umfassend folgende Schritte:
- Bereitstellen eines lichtdurchlässigen Tragelements mit einer ersten Oberfläche und einer zweiten Oberfläche,
- Auftragen einer ersten Beschichtung auf die erste Oberfläche derart, dass die erste Beschichtung einen im Wesentlichen lichtundurchlässigen Abschnitt und eine Anzahl von lichtdurchlässigen ersten Abschnitten aufweist, und
- Auftragen einer zweiten Beschichtung auf die zweite Oberfläche, wobei
- die die lichtdurchlässigen ersten Abschnitte (24) durch Maskieren, unter Verwendung einer Anti-Haft-Beschichtung, oder durch Entfernen oder Ausdünnen der ersten Beschichtung (18) hergestellt werden.

Die vorschlagsgemäße Beleuchtungsvorrichtung lässt sich mit vergleichsweise wenigen Verfahrensschritten bereitstellen, so dass die Herstellung schnell und kostengünstig ist. Dabei ist vorgesehen, dass die lichtdurchlässigen ersten Abschnitte durch Maskieren oder unter Verwendung einer Anti-Haft-Beschichtung hergestellt werden. Auf diese Weise lässt sich der lichtdurchlässige erste Abschnitt einfach und kostengünstig bereitstellen, insbesondere deshalb, da hier die lichtdurchlässigen ersten Abschnitte bereits bei der Herstellung der ersten Beschichtung entstehen. Eine nachträgliche Entfernung oder Ausdünnung ist nicht notwendig, so dass ein derartiger weiterer Arbeitsschritt entfallen kann.

Alternativ ist vorgesehen, dass die lichtdurchlässigen ersten Abschnitte durch Entfernen oder Ausdünnen der ersten Beschichtung hergestellt werden. Das Entfernen oder Ausdünnen der ersten Beschichtung in den lichtdurchlässigen ersten Bereichen ist ein vergleichsweise einfacher Arbeitsschritt, der kostengünstig durchgeführt werden kann.

Nach Maßgabe einer fortentwickelten Ausbildung wird die erste Beschichtung durch Gravieren, Ätzen oder mittels eines Lasers entfernt oder ausgedünnt. Insbesondere bei Verwendung eines Lasers kann der lichtdurchlässige erste Bereich auf sehr einfache und sehr genaue Weise bereitgestellt werden. Hierbei sei angemerkt, dass der lichtdurchlässige erste Abschnitt mit einem Laser auch dann bereitgestellt werden kann, wenn die erste Beschichtung komplett fertiggestellt worden ist. Für den Fall, dass die erste Beschichtung eine oder mehrere transparente Schutzschichten aufweist, kann der Laser so eingestellt werden, dass er diese Schutzschichten durchdringt und nur dort wirksam ist, wo die lichtdurchlässigen Abschnitte angeordnet werden sollen.

Eine Ausgestaltung der Offenbarung betrifft ein externes oder internes Verkleidungsbauteil für ein Personen- und/oder Gütertransportmittel, umfassend zumindest eine Beleuchtungsvorrichtung nach einer der vorherigen Ausführungsformen.

Eine Variante der Offenbarung betrifft ein Personen- und/oder Gütertransportmittel, umfassend zumindest ein externes und/oder internes Verkleidungsbauteil nach der zuvor erörterten Ausgestaltung und/oder zumindest eine Beleuchtungsvorrichtung nach einer der vorherigen Ausführungsformen.

Die technischen Effekte und Vorteile, die sich mit dem vorschlagsgemäßen externen oder internen Verkleidungsbauteil und dem Personen- und/oder Gütertransportmittel erreichen lassen, entsprechen denjenigen, die für die vorliegende Beleuchtungsvorrichtung erörtert worden sind. Zusammenfassend sei darauf hingewiesen, dass sich das Verkleidungsbauteil und das Personen-und/oder Gütertransportmittel mit einer Beleuchtungsvorrichtung ausstatten lassen, die sich auf einfache Weise an komplexe Oberflächengeometrien anpassen lässt und zudem bei ausgeschalteter Lichtquelle eine homogene Oberfläche bereitstellt, bei welcher der Betrachter die lichtdurchlässigen Abschnitte so gut wie nicht von den benachbart angeordneten lichtundurchlässigen Abschnitten unterscheiden kann.

Beispielhafte Ausführungsformen der Offenbarung werden im Folgenden unter Bezugnahme auf die beigefügten Zeichnungen näher erläutert. Es zeigen
- Figur 1A: ein erstes Ausführungsbeispiel einer vorschlagsgemäßen Beleuchtungsvorrichtung anhand einer prinzipiellen Schnittdarstellung bei eingeschalteter Lichtquelle,
- Figur 1B: das in Figur 1A dargestellte Ausführungsbeispiel der vorschlagsgemäßen Beleuchtungsvorrichtung anhand einer prinzipiellen Draufsicht, ebenfalls bei eingeschalteter Lichtquelle,
- Figur 2A: die in Figur 1A dargestellte Beleuchtungsvorrichtung bei ausgeschalteter Lichtquelle,
- Figur 2B: die in Figur 1B dargestellte Beleuchtungsvorrichtung bei ausgeschalteter Lichtquelle,
- Figur 3A: ein zweites Ausführungsbeispiel einer vorschlagsgemäßen Beleuchtungsvorrichtung anhand einer prinzipiellen Schnittdarstellung bei eingeschalteter Lichtquelle,
- Figur 3B: das in Figur 3A dargestellte Ausführungsbeispiel der vorschlagsgemäßen Beleuchtungsvorrichtung anhand einer prinzipiellen Draufsicht, ebenfalls bei eingeschalteter Lichtquelle,
- Figur 4A: die in Figur 3A dargestellte Beleuchtungsvorrichtung bei ausgeschalteter Lichtquelle,
- Figur 4B: die in Figur 3B dargestellte Beleuchtungsvorrichtung bei ausgeschalteter Lichtquelle,
- Figur 5: ein drittes Ausführungsbeispiel einer vorschlagsgemäßen Beleuchtungsvorrichtung anhand einer prinzipiellen Schnittdarstellung bei eingeschalteter Lichtquelle,
- Figur 6: ein viertes Ausführungsbeispiel einer vorschlagsgemäßen Beleuchtungsvorrichtung anhand einer prinzipiellen Schnittdarstellung bei eingeschalteter Lichtquelle,
- Figur 7: ein fünftes Ausführungsbeispiel einer vorschlagsgemäßen Beleuchtungsvorrichtung anhand einer prinzipiellen Schnittdarstellung bei eingeschalteter Lichtquelle, und
- Figur 8: ein Personen-und/oder Gütertransportmittel, welches eine Anzahl von vorschlagsgemäßen Beleuchtungsvorrichtungen aufweist.

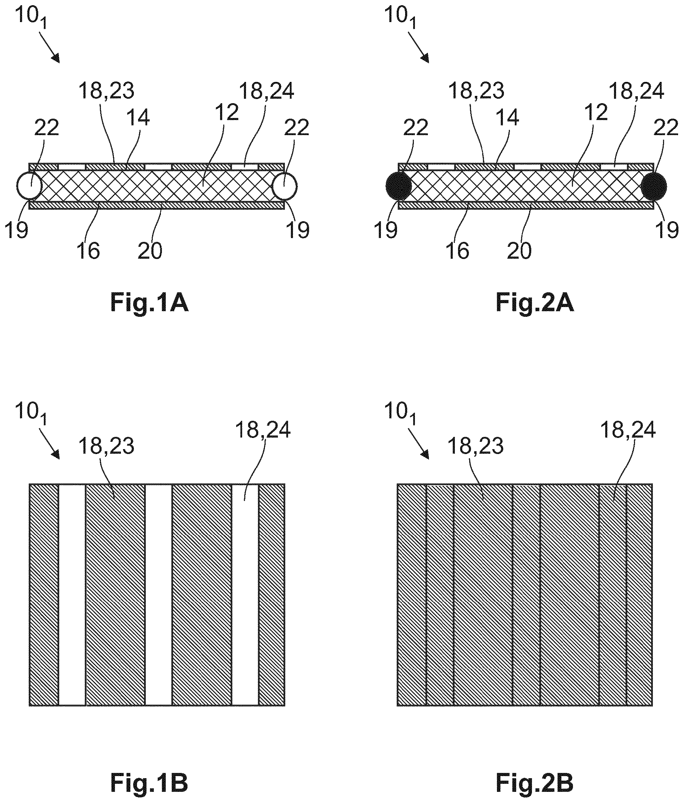

In Figur 1A ist ein erstes Ausführungsbeispiel einer vorschlagsgemäßen Beleuchtungsvorrichtung 10₁ anhand einer prinzipiellen Schnittdarstellung gezeigt. Die Beleuchtungsvorrichtung 10₁ weist ein lichtdurchlässiges Tragelement 12 mit einer ersten Oberfläche 14 und einer zweiten Oberfläche 16 sowie zwei Stirnflächen 19 auf. Das lichtdurchlässige Tragelement 12 kann beispielsweise aus Glas oder einem lichtdurchlässigen Kunststoff gefertigt sein.

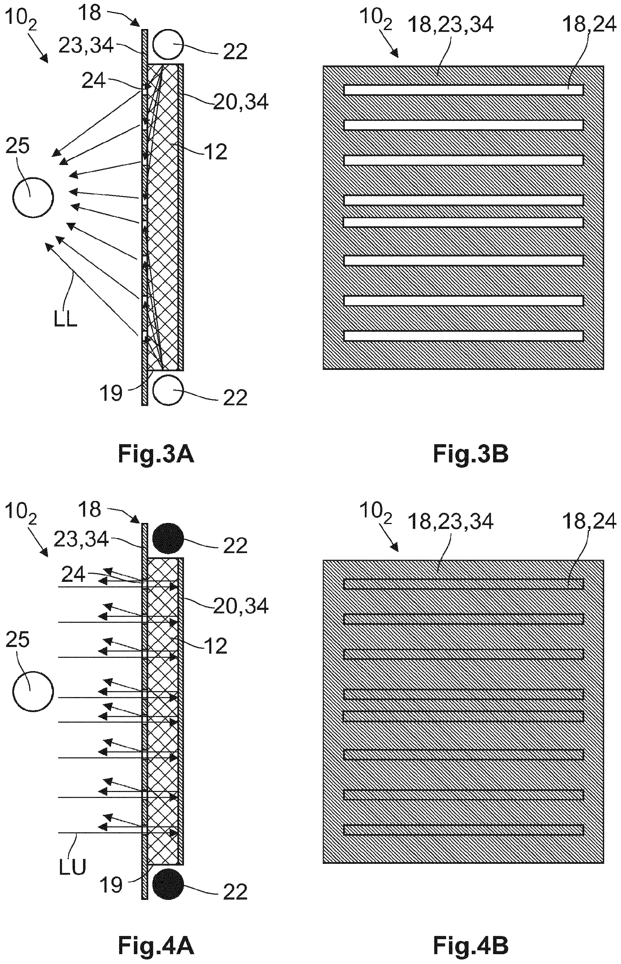

Auf der ersten Oberfläche 14 ist eine erste Beschichtung 18 und auf die zweite Oberfläche 16 eine zweite Beschichtung 20 aufgetragen. Zudem umfasst die Beleuchtungsvorrichtung 10₁ zwei Lichtquellen 22, die Lichtstrahlen LL bereitstellen, welche in das lichtdurchlässige Tragelement 12 eingeleitet werden können (vgl. Figuren 3A und 4A).

Im ersten Ausführungsbeispiel der Beleuchtungsvorrichtung 10₁ sind sowohl die erste Beschichtung 18 als auch die zweite Beschichtung 20 im Wesentlichen lichtundurchlässig, worunter zu verstehen ist, dass der überwiegende Teil der Lichtstrahlen LL die erste Beschichtung 18 und die zweite Beschichtung 20 nicht durchlaufen kann und von diesen absorbiert wird. Allerdings weist die erste Beschichtung 18 eine Anzahl von lichtdurchlässigen ersten Abschnitten 24 auf, durch welche die von den Lichtquellen 22 bereitgestellten Lichtstrahlen LL die Beleuchtungsvorrichtung 10₁ verlassen können. Folglich weist die erste Beschichtung 18 auch zumindest einen im Wesentlichen lichtundurchlässigen Abschnitt 23 auf, der benachbart zum lichtdurchlässigen ersten Abschnitt 24 angeordnet ist.

In den Figuren 1A und 1B ist die Beleuchtungsvorrichtung 10₁ bei eingeschalteten Lichtquellen 22 dargestellt. Insbesondere aus der Figur 1B, welche eine Draufsicht auf die erste Oberfläche 14 und die hierauf aufgebrachte erste Beschichtung 18 zeigt, ist erkennbar, dass die lichtdurchlässigen ersten Abschnitte 24 linienförmig ausgebildet sind. Die lichtdurchlässigen ersten Abschnitte 24 können aber auch andere Formen aufweisen, beispielsweise punktförmig.

In den Figuren 2A und 2B ist die Beleuchtungsvorrichtung 10₁ bei ausgeschalteten Lichtquellen 22 dargestellt. Die zweite Beschichtung 20 ist so ausgebildet, dass die lichtdurchlässigen ersten Abschnitte 24 bei ausgeschalteten Lichtquellen 22 kaum von den benachbart angeordneten lichtundurchlässigen Abschnitten 23 der ersten Beschichtung 18 zu unterscheiden sind. Hierzu werden insbesondere die Farbe und die Reflexionseigenschaften der zweiten Beschichtung 20 entsprechend ausgewählt.

Insbesondere aus der Figur 2B ist erkennbar, dass nur bei sehr genauer Betrachtung die linienförmige Ausbildung der lichtdurchlässigen ersten Abschnitte 24 der ersten Beschichtung 18 erkennbar ist. Von weitem jedoch weist die Beleuchtungsvorrichtung 10₁ eine sehr homogene visuelle oder optische Erscheinung auf, wenn die Lichtquellen 22 ausgeschaltet sind. Hierbei ist es hilfreich, wenn die lichtdurchlässigen ersten Abschnitte 24 im Vergleich zu den benachbart angeordneten lichtundurchlässigen Abschnitten 23 der ersten Beschichtung 18 eine verhältnismäßig kleine Fläche aufweisen.

In den Figuren 3A bis 4B ist ein zweites Ausführungsbeispiel der vorschlagsgemäßen Beleuchtungsvorrichtung 10₂ anhand von verschiedenen Darstellungen bei eingeschalteten Lichtquellen 22 (Figuren 3A und 3B) und bei ausgeschalteten Lichtquellen 22 (Figuren 4A und 4B) dargestellt. Die Beleuchtungsvorrichtung 10₂ nach dem zweiten Ausführungsbeispiel entspricht weitgehend demjenigen des ersten Ausführungsbeispiels. In den Figuren 3A und 4A ist der Strahlengang der Lichtstrahlen LL bzw. LU durch die Beleuchtungsvorrichtung 10₂ eingezeichnet. Die beiden Lichtquellen 22 sind seitlich vom Tragelement 12 angeordnet, so dass die Lichtstrahlen LL über die Stirnflächen 19 in das lichtdurchlässige Tragelement 12 eingekoppelt werden. Die Lichtstrahlen LL durchlaufen dabei zunächst das lichtdurchlässige Tragelement 12, bis dass sie auf die lichtdurchlässigen ersten Abschnitte 24 treffen, diese durchqueren und infolgedessen die Beleuchtungsvorrichtung 10₂ verlassen.

In den Figuren 3A und 4A ist ein Betrachter 25 stark vereinfacht dargestellt, welcher auf die erste Beschichtung 18 der Beleuchtungsvorrichtung 10₂ blicken kann. Hierdurch wird deutlich, dass die erste Beschichtung 18 die Sichtseite der Beleuchtungsvorrichtung 10₂ bildet. Aufgrund der Ausgestaltung der Beleuchtungsvorrichtung 10₂ ergibt sich für den Betrachter 25 bei eingeschalteten Lichtquellen 22 das in Figur 3B dargestellte Beleuchtungsmuster. Wie auch im ersten Ausführungsbeispiel sind die lichtdurchlässigen ersten Abschnitte 24 linienförmig ausgebildet.

In Figur 4A ist der sich bei ausgeschalteten Lichtquellen 22 einstellende Strahlengang der Lichtstrahlen LU dargestellt. Da die Lichtquellen 22 ausgeschaltet sind, stellen diese keine Lichtstrahlen LL bereit. Die Lichtstrahlen LU stammen daher ausschließlich vom Umgebungslicht. Die Lichtstrahlen LU des Umgebungslichts treffen zunächst auf die erste Beschichtung 18, von welcher ein Teil der Lichtstrahlen LU des Umgebungslichts reflektiert wird und vom Betrachter 25 wahrgenommen werden kann. Die Lichtstrahlen LU des Umgebungslichts, welche auf die lichtdurchlässigen ersten Abschnitte 24 treffen, durchlaufen das lichtdurchlässige Tragelement 12 und treffen auf die zweite Beschichtung 20. Da die zweite Beschichtung 20 lichtundurchlässig ist, werden die auf sie treffenden Lichtstrahlen LU des Umgebungslichts reflektiert. Derjenige Teil der reflektierten Lichtstrahlen LU, welcher von der zweiten Beschichtung 20 auf die lichtdurchlässigen ersten Abschnitte 24 trifft, verlässt die Beleuchtungsvorrichtung 10₂ wieder. Da die Farbe und die Reflexionseigenschaften der zweiten Beschichtung 20 so gewählt sind, dass sie visuell der ersten Beschichtung 18 entsprechen, ergibt sich das in Figur 4B dargestellte Erscheinungsbild. Aus der Figur 4B geht hervor, dass erste Beschichtung 18 für den Betrachter 25 bei ausgeschalteten Lichtquellen 22 optisch oder visuell sehr homogene erscheint, wobei die lichtdurchlässigen ersten Abschnitte 24 kaum von den benachbart angeordneten lichtundurchlässigen Abschnitten 23 der ersten Beschichtung 18 zu unterscheiden sind.

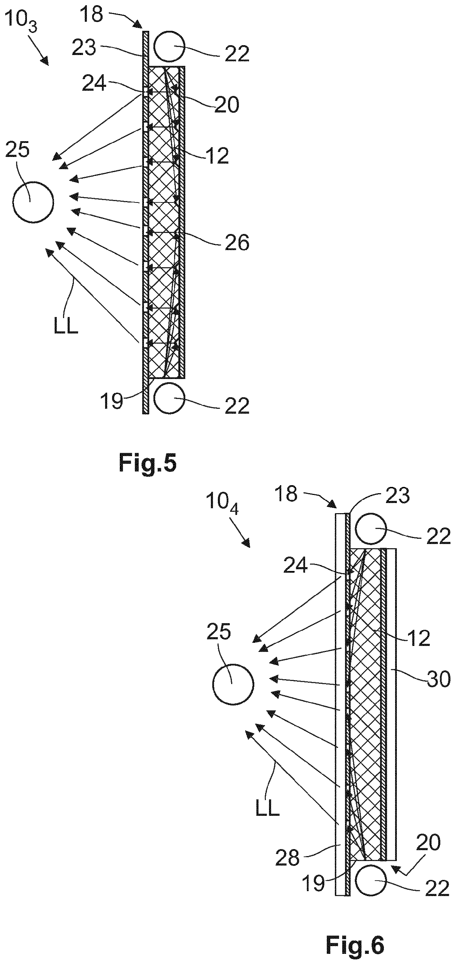

In Figur 5 ist ein drittes Ausführungsbeispiel der vorschlagsgemäßen Beleuchtungsvorrichtung 10₃ anhand einer prinzipiellen Schnittdarstellung bei eingeschalteten Lichtquellen 22 gezeigt. Das dritte Ausführungsbeispiel der Beleuchtungsvorrichtung 10₃ gleicht zum größten Teil dem ersten Ausführungsbeispiel und dem zweiten Ausführungsbeispiel der Beleuchtungsvorrichtung 10₁, 10₂, so dass im Folgenden nur auf die Unterschiede eingegangen wird. Im dritten Ausführungsbeispiel der Beleuchtungsvorrichtung 10₃ weist das lichtdurchlässige Tragelement 12 Lichtauskopplungsstrukturen 26 auf, welche im Bereich der zweiten Oberfläche 16 (siehe Figuren 1A und 2A) angeordnet sind. Prinzipiell können die Lichtauskopplungsstrukturen 26 aber auch an anderen Orten innerhalb des Tragelements 12, innerhalb der ersten Beschichtung 18 und/oder innerhalb oder auf der zweiten Beschichtung 20 angeordnet sein. Die Lichtauskopplungsstrukturen 26 können beispielsweise im Siebdruck hergestellt werden. Die Lichtauskopplungsstrukturen 26 sind so angeordnet und ausgebildet, dass sie die Lichtstrahlen LL, welche auf die Lichtauskopplungsstrukturen 26 treffen, zu denen lichtdurchlässigen ersten Abschnitten 24 hin lenken. Hierdurch wird der Anteil des Lichts, welcher von den beiden Lichtquellen 22 in das Tragelement 12 eingekoppelt wird und die Beleuchtungsvorrichtung 10₃ durch die lichtdurchlässigen ersten Abschnitte 24 verlässt, vergrößert.

In Figur 6 ist ein viertes Ausführungsbeispiel der vorschlagsgemäßen Beleuchtungsvorrichtung 10₄ ebenfalls anhand einer prinzipiellen Schnittdarstellung bei eingeschalteten Lichtquellen 22 gezeigt. Auch das vierte Ausführungsbeispiel des der vorschlagsgemäßen Beleuchtungsvorrichtung 10₄ gleicht in weiten Teilen dem ersten Ausführungsbeispiel und dem zweiten Ausführungsbeispiel der Beleuchtungsvorrichtung 10₁, 10₂. Allerdings umfasst die erste Beschichtung 18 eine lichtdurchlässige Schutzschicht 28, welche die freie Oberfläche der ersten Beschichtung 18 bildet. Auch die zweite Beschichtung 20 umfasst eine Schutzschicht 30, die ebenfalls die freie Oberfläche der zweiten Beschichtung 20 bildet. Die Schutzschicht 30 der zweiten Beschichtung 20 muss nicht notwendigerweise lichtdurchlässig sein, wobei es sich aus fertigungstechnischen und ökonomischen Gründen anbietet, die Schutzschicht 28 der ersten Beschichtung 18 und die Schutzschicht 30 der zweiten Beschichtung 20 identisch auszugestalten.

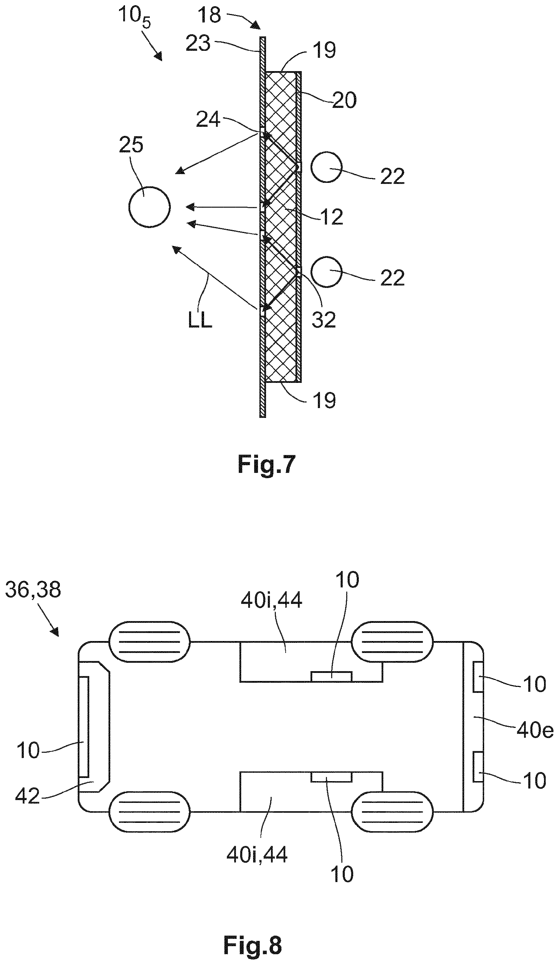

In Figur 7 ist ein fünftes Ausführungsbeispiel der vorschlagsgemäßen Beleuchtungsvorrichtung 10₅ anhand einer prinzipiellen Schnittdarstellung bei eingeschalteten Lichtquellen 22 gezeigt. Im fünften Ausführungsbeispiel sind die Lichtquellen 22 nicht seitlich vom lichtdurchlässigen Tragelement 12, sondern von der ersten Beschichtung 18 aus gesehen hinter der zweiten Beschichtung 20 angeordnet. Auch in diesem fünften Ausführungsbeispiel ist die zweite Beschichtung 20 lichtundurchlässig. Damit das von den Lichtquellen 22 erzeugte Licht in das lichtdurchlässige Tragelement 12 eingekoppelt werden kann, weist die zweite Beschichtung 20 lichtdurchlässige zweite Abschnitte 32 auf. Die lichtdurchlässigen zweiten Abschnitte 32 sind versetzt zu den lichtdurchlässigen ersten Abschnitten 24 angeordnet, wodurch verhindert wird, dass der Betrachter 25 direkt auf die Lichtquellen 22 blicken kann.

Unabhängig von den Ausführungsbeispielen können sowohl die erste Beschichtung 18 als auch die zweite Beschichtung 20 als Lackierungen 34 oder Folien 34 ausgebildet werden. Als Auftragsverfahren bieten sich PVD (Physical Vapor Deposition, CVD (Chemical Vapor Deposition) oder dergleichen an. Die erste Beschichtung 18 kann auch eine klassische Lackierung 34 mit einem zwei- oder dreischichtigen Aufbau sein. In diesem Fall genügt es, wenn lediglich in den lichtundurchlässigen Schichten die lichtdurchlässigen ersten Abschnitte 24 geschaffen werden. Insbesondere kann eine Grundierung vorgesehen sein, die üblicherweise lichtundurchlässig ist. Die lichtdurchlässigen ersten Abschnitte 24 und die lichtdurchlässigen zweiten Abschnitte 32 können durch Entfernen oder Ausdünnen der lichtundurchlässigen Schichten erzeugt werden. Dabei wird nur die lichtundurchlässige Schicht entfernt und das Tragelement 12 nicht angegriffen.

Bei Verwendung eines intrinsischen Lasers können die Laserstrahlen die lichtdurchlässigen Schutzschicht 28, 30 durchqueren und erst in der lichtundurchlässigen Schicht wirken. Dabei kann es genügen, die lichtundurchlässige Schicht nur soweit auszudünnen, dass eine ausreichende Lichtmenge die lichtundurchlässige Schicht durchqueren kann.

In Figur 8 ist ein Personen- und/oder Gütertransportmittel 36 anhand einer prinzipiellen Draufsicht gezeigt, welches als ein Kraftfahrzeug 38 ausgeführt ist und insgesamt fünf der vorschlagsgemäßen Beleuchtungsvorrichtungen 10 aufweist. Zwei der Beleuchtungsvorrichtungen 10 sind in einem externen Verkleidungsbauteil 40e angeordnet, welches hier als Stoßfänger ausgebildet ist. Eine dritte der Beleuchtungsvorrichtungen 10 ist in der Heckklappe 42 des Fahrzeugs 38 angeordnet. Die äußere Oberfläche der Beleuchtungsvorrichtung 10 bildet dabei einen Teil der Oberfläche des externen Verkleidungsbauteils 40e oder der Heckklappe 42. Die äußere Oberfläche schließt sich nahtlos oder nahezu nahtlos an die umgebenden Oberflächen des Fahrzeugs 38 an. Zwei weitere der vorschlagsgemäßen Beleuchtungsvorrichtungen 10 sind jeweils an einem internen Verkleidungsbauteil 40i angeordnet, welche als eine Türverkleidung 44 dienen.

Bei elektrisch betriebenen Fahrzeugen stellt sich folgende Situation dar: Da Elektromotoren im Gegensatz zu Verbrennungsmotoren keine Luftgitter mehr benötigen, können die Beleuchtungsvorrichtungen 10 beispielsweise im Kühlergrill angeordnet werden. Sie können aber dennoch vorgesehen sein, insbesondere aus Gestaltungsgründen, unterscheiden sich in diesem Fall aber deutlich von den für Verbrennungsmotoren verwendeten Luftgittern.

### Bezugszeichenliste

- 10: Beleuchtungsvorrichtung
- 10₁ - 10₅: Beleuchtungsvorrichtung
- 12: Trageelement
- 14: erste Oberfläche
- 16: zweite Oberfläche
- 18: erste Beschichtung
- 19: Stirnfläche
- 20: zweite Beschichtung
- 22: Lichtquelle
- 23: lichtundurchlässiger Abschnitt
- 24: erster Abschnitt
- 25: Betrachter
- 26: Lichtauskopplungsstrukturen
- 28: Schutzschicht
- 30: Schutzschicht
- 32: zweiter Abschnitt
- 34: Lackierung, Folie
- 36: Personen-und/oder Gütertransportmittel
- 38: Kraftfahrzeug
- 40: Verkleidungsbauteil
- 40e: externes Verkleidungsbauteil
- 40i: internes Verkleidungsbauteil
- 42: Heckklappe
- 44: Turverkleidung

- LL: Lichtstrahlen Lichtquelle
- LT: Lichtstrahlen Umgebung Licht

## Patentansprüche

1. Beleuchtungsvorrichtung (10) für ein Personen- und/oder Gütertransportmittel (36) oder für ein externes oder internes Verkleidungsbauteil (40) eines Personen- und/oder Gütertransportmittels (36), umfassend
- ein lichtdurchlässiges Tragelement (12) mit einer ersten Oberfläche (14) und einer zweiten Oberfläche (16),
- eine auf die erste Oberfläche (14) aufgetragene erste Beschichtung (18),
- eine auf die zweite Oberfläche (16) aufgetragene zweite Beschichtung (20), und
- zumindest eine Lichtquelle (22) zum Bereitstellen von Licht im Tragelement (12), wobei
- die erste Beschichtung (18) zumindest einen im Wesentlichen lichtundurchlässigen Abschnitt (23) und eine Anzahl von lichtdurchlässigen ersten Abschnitten (24) aufweist,
**dadurch gekennzeichnet, dass** die zweite Beschichtung (20) hinsichtlich ihrer Farbe und/oder ihrer Reflexionseigenschaften so ausgebildet ist, dass die lichtdurchlässigen ersten Abschnitte (24) bei ausgeschalteter Lichtquelle (22) visuell dem lichtundurchlässigen Abschnitt (23) der ersten Beschichtung (18) entsprechen oder nahezu entsprechen.

2. Beleuchtungsvorrichtung (10) nach Anspruch 1,
**dadurch gekennzeichnet, dass** das lichtdurchlässige Tragelement (12) aus Glas oder aus einem lichtdurchlässigen Kunststoff besteht.

3. Beleuchtungsvorrichtung (10) nach Anspruch 2,
**dadurch gekennzeichnet, dass** das lichtdurchlässige Tragelement (12) zum Auskoppeln des Lichts lichtstreuend ist und/oder Lichtauskopplungsstrukturen (26) aufweist.

4. Beleuchtungsvorrichtung (10) nach einen der vorherigen Ansprüche,
**dadurch gekennzeichnet, dass** die erste Beschichtung (18) als eine Lackierung (34) ausgebildet ist oder eine Folie (34) umfasst oder aus dieser besteht.

5. Beleuchtungsvorrichtung (10) nach einen der vorherigen Ansprüche,
**dadurch gekennzeichnet, dass** die erste Beschichtung (18) eine oder mehrere Schutzschichten (28) umfasst, die zumindest in den lichtdurchlässigen ersten Abschnitten (24) lichtdurchlässig sind.

6. Beleuchtungsvorrichtung (10) nach einen der vorherigen Ansprüche,
**dadurch gekennzeichnet, dass** die zweite Beschichtung (20) eine Anzahl von lichtdurchlässigen zweiten Abschnitten (32) aufweist und die Lichtquelle (22) von der ersten Beschichtung (18) aus gesehen hinter der zweiten Beschichtung (20) angeordnet ist.

7. Beleuchtungsvorrichtung (10) nach Anspruch 6,
**dadurch gekennzeichnet, dass** die lichtdurchlässigen zweiten Abschnitte (32) von der ersten Beschichtung (18) aus gesehen versetzt zu den lichtdurchlässigen ersten Abschnitten (24) angeordnet sind.

8. Beleuchtungsvorrichtung (10) nach einen der vorherigen Ansprüche,
**dadurch gekennzeichnet, dass** die zweite Beschichtung (20) als eine Lackierung (34) ausgebildet ist oder eine Folie (34) umfasst oder aus dieser besteht.

9. Beleuchtungsvorrichtung (10) nach einen der vorherigen Ansprüche, **dadurch gekennzeichnet, dass** die zweite Beschichtung (20) eine oder mehrere Schutzschichten (30) umfasst.

10. Beleuchtungsvorrichtung (10) nach einem der vorherigen Ansprüche,
**dadurch gekennzeichnet, dass** die zweite Beschichtung (20) im Wesentlichen lichtundurchlässig ist.

11. Verfahren zum Herstellen einer Beleuchtungsvorrichtung (10) nach einem der vorherigen Ansprüche, umfassend folgende Schritte:
- Bereitstellen eines lichtdurchlässigen Tragelements (12) mit einer ersten Oberfläche (14) und einer zweiten Oberfläche (16),
- Auftragen einer ersten Beschichtung (18) auf die erste Oberfläche (14) derart, dass die erste Beschichtung (18) einen im Wesentlichen lichtundurchlässigen Abschnitt (23) und eine Anzahl von lichtdurchlässigen ersten Abschnitten (24) aufweist, und
- Auftragen einer zweiten Beschichtung (20) auf die zweite Oberfläche (16)
**dadurch gekennzeichnet, dass** die die lichtdurchlässigen ersten Abschnitte (24) durch
∘ Maskieren,
∘ unter Verwendung einer Anti-Haft-Beschichtung, oder
∘ durch Entfernen oder Ausdünnen der ersten Beschichtung (18) hergestellt werden.

12. Verfahren nach Anspruch 11, **dadurch gekennzeichnet, dass** die erste Beschichtung (18) durch Gravieren, Ätzen oder mittels eines Lasers entfernt oder ausgedünnt wird.

13. Externes oder internes Verkleidungsbauteil (40) für ein Personen- und/oder Gütertransportmittel (36), umfassend zumindest eine Beleuchtungsvorrichtung (10) nach einem der nach einem der Ansprüche 1 bis 10.

14. Personen- und/oder Gütertransportmittel (36), umfassend zumindest ein externes und/oder internes Verkleidungsbauteil (40) nach Anspruch 13 und/oder zumindest eine Beleuchtungsvorrichtung (10) nach einem der Ansprüche 1 bis 10.
